# EUROPEAN PATENT SPECIFICATION

(11) **EP 3 538 798 B1**
(45) Date of publication and mention of the grant of the patent: **01.09.2021**
(21) Application number: 17797519.0
(22) Date of filing: 06.11.2017
(51) Int. Cl.: F16K 17/12, F16K 31/08, F16K 24/06

(54) **VACUUM VALVE FOR CARGO TANKS IN, FOR INSTANCE, OIL TANKERS**
VAKUUMVENTIL FÜR LADETANKS, ETWA IN ÖLTANKERN
SOUPAPE À VIDE POUR CITERNES DE CHARGEMENT, PAR EXEMPLE DES CITERNES À HUILE

(30) Priority: 11.11.2016 DK PA201670891
(43) Date of publication of application: 18.09.2019
(73) Proprietor: Sørensen, Eric Aarestrup, Finchampstead, Wokingham RG40 3SS (GB)
(72) Inventor: Sørensen, Eric Aarestrup, Finchampstead, Wokingham RG40 3SS (GB)
(74) Representative: AWA Denmark A/S
(86) International application number: PCT/DK2017/050364
(87) International publication number: WO 2018/086665

(56) References cited:
- WO-A1-02/095275
- KR-B1- 101 174 654
- KR-B1- 101 174 654
- SU-A2- 911 084
- US-A1- 2007 113 902
- US-A1- 2015 184 756

## Description

The present invention concerns a vacuum valve for cargo tanks in, for instance, oil tankers and intended for equalizing underpressure in such cargo tanks caused, for instance, during emptying of the cargo tank or by temperature changes, the vacuum valve comprising a valve housing with a valve body and a thereto associated valve seat, the valve body being axially movable relative to the valve seat between an open position and a closed position, where the position of the valve body relative to the valve seat is dependent on the difference between the pressure in the cargo tank and the ambient pressure exterior to the vacuum valve.

Vacuum valves for equalizing underpressure in tanks in general as well as in cargo tanks on board ships in particular, and comprising a counterweight defining the opening point of the valve are known.

For instance, SU 911 084 A2 discloses such a vacuum valve. The valve comprises a valve body, a valve seat, a valve stem with a hole, an outlet opening a number of inlet-/outlet channels and a resilient membrane with a rigid center attached to the valve stem with a nut. Furthermore, the valve comprises magnet based closing arrangement with two permanent magnets, where one of the magnets is attached to a stop, which is in connection with a spring element. The two magnets are arranged on the outside of the valve housing where atmospheric pressure prevails. KR101174654B (see valve (50) on the right part of figure 2) discloses a vacuum valve according to the preamble of claim 1.

There are international regulations for type approval/test of equipment in connection with vacuum valves for use in cargo tanks found on board oil tankers. In particular such vacuum valves must fulfil the requirements set up in ISO standard no. 15364. A substantial provision in these regulations is for the vacuum valve in a test set-up to exhibit an opening point at a predetermined first pressure difference between the ambient and the cargo tank as well as a closing point at a predetermined second pressure difference between the ambient and the cargo tank being lower than the first predetermined pressure difference. Typical values are 350 mm water column for the first pressure difference and 100 mm water column for the second pressure difference.

Vacuum valves for equalizing underpressure in cargo tanks on board ships, and fulfilling these international regulations are also known.

However, shipping companies operating such oil tankers and/or like vessels have recently introduced toughened requirements as to the allowable pressure difference between the exterior or ambient and the cargo tanks. In particular, the shipping companies operate with alarm systems setting off already at a pressure difference being 10 % above the pressure difference corresponding to the opening point of the traditional vacuum valves.

In other words, there is a need for a vacuum valve for cargo tanks on board ships with which the pressure equalizing process is carried out in such a way that the pressure difference between the ambient and the cargo tank never exceeds a pressure difference of about the predetermined first pressure difference between the ambient and the cargo tank corresponding to the opening point of the vacuum valve plus 10 % thereof, or for the particular value mentioned above about 350 mm water column plus 10 % thereof, i.e. about 385 mm water column.

For the existing types of vacuum valves this can only be achieved in case the diameter of the valve housing is made very large, in practice at least 10 to 12 inches or 25,4 cm to 30.48 cm, which is not practically possible without ending up no longer complying with the international regulations.

The object of the invention therefore is to provide a vacuum valve of the type mentioned by way of introduction with which the pressure equalizing process is carried out in such a way that the pressure difference never exceeds a pressure difference between the ambient and the cargo tank of about the predetermined first pressure difference between the ambient and the cargo tank corresponding to the opening point of the vacuum valve plus 10 % thereof, or about 350 mm water column plus 10 % thereof, and which simultaneously complies with the international regulations, and especially the provisions for the opening point of the vacuum valve.

This object is achieved by a vacuum valve of the type mentioned initially and comprising a weight arranged outside of the valve housing in such a way that in the open position of the valve body the force of gravity on the weight seeks to move the valve body towards the closed position, and a first magnet provided on the valve body and a second magnet or a material attracted to magnets provided in the valve housing, or a first magnet is provided in the valve housing and a second magnet or a material attracted to magnets provided on the valve body, in such a way that the magnetic force seeks to hold the valve body against the valve seat and where the first magnet and the first magnet and the second magnet or the material attracted to magnets as well as the mass of the weight is chosen to define an opening point of the vacuum valve at a predetermined first pressure difference between the ambient and the cargo tank as well as a closing point of the vacuum valve at a predetermined second pressure difference between the ambient and the cargo tank being lower than the first predetermined pressure difference.

By providing a vacuum valve with a weight arranged below the valve housing in such a way that in the open position of the valve body the force of gravity on the weight seeks to move the valve body towards the closed position, a vacuum valve is provided which exhibits a closing motion with a smooth flow curve having a small inclination. Thereby, it is ensured that the vacuum valve closes slowly and smoothly and that a substantially full pressure equalization is obtained before the vacuum valve closes.

By providing a first magnet on the valve body and a second magnet or a material attracted to magnets in the valve housing, or a first magnet in the valve housing and a second magnet or a material attracted to magnets on the valve body, in such a way that the magnetic force seeks to hold the valve body against the valve seat, a vacuum valve is provided in which the vacuum valve opens quickly to its fully open position when the pressure difference mentioned above exceeds the first predetermined pressure difference defining the opening point, and with which the pressure equalizing process is carried out in a fast and efficient way such that the pressure difference never exceeds a pressure difference between the ambient and the cargo tank of about the predetermined first pressure difference plus 10 % thereof.

By furthermore choosing the first magnet and the second magnet or the material attracted to magnets as well as the mass of the weight to define an opening point of the vacuum valve at a predetermined first pressure difference between the ambient and the cargo tank as well as a closing point of the vacuum valve at a predetermined second pressure difference between the ambient and the cargo tank being lower than the first predetermined pressure difference, a vacuum valve is provided which also complies with the relevant international standards for vacuum valves used on cargo tanks onboard ships.

Thus, a vacuum valve is provided with which both the new requirements posed by the shipping companies and the international regulations, and especially the provisions for the opening point and closing point of the vacuum valve, is complied with simultaneously, and which vacuum valve may furthermore readily be incorporated in the already existing solutions for pressure equalization, particularly the already existing pressure equalization stubs or pipes, of cargo tanks on board ships.

In an embodiment the vacuum valve further comprises a valve stem with opposite first and second ends and a guide element in which the valve stem is arranged in an axially movable manner, and the valve body is arranged at or on the first end of a valve stem, the weight is arranged at or on the second end of the valve stem, the first magnet is arranged on the valve stem adjacent to the valve body or on a side of the guide element opposite to the weight, and the second magnet or the material attracted to magnets is arranged on a side of the guide element opposite to the weight or on the valve stem adjacent to the valve body,

Thereby a vacuum valve solving the above-mentioned problem and simultaneously having a particularly simple and robust structure is provided for.

In a further embodiment the force of magnetic attraction between the first magnet and the second magnet or material attracted to magnets substantially defines an opening point of the vacuum valve, and such that the force of gravity on the weight substantially defines the closing point of the vacuum valve.

In an embodiment the first magnet and the second magnet or the material attracted to magnets is chosen and the mass of the weight is chosen to define the closing point of the vacuum valve at a pressure difference between the pressure in the cargo tank and the pressure exterior to the vacuum valve of between 90 and 110 mm water column, and to define the opening point of the vacuum valve at a pressure difference between the pressure in the cargo tank and the pressure exterior to the vacuum valve of between 340 and 360 mm water column.

In an alternative embodiment the first magnet and the second magnet or the material attracted to magnets is chosen and the mass of the weight is chosen to define the closing point of the vacuum valve at a pressure difference between the pressure in the cargo tank and the pressure exterior to the vacuum valve of 100 mm water column, and to define the opening point of the vacuum valve at a pressure difference between the pressure in the cargo tank and the pressure exterior to the vacuum valve of 350 mm water column.

By both above-mentioned embodiments a vacuum valve complying with the international regulations for such valves when used on board ships is provided.

In an embodiment the first magnet and the second magnet or the material attracted to magnets is chosen to provide between 55% and 75%, in particular 2/3, of the force needed to define the opening point of the vacuum valve at the first predetermined pressure difference between the pressure in the cargo tank and the ambient pressure.

It is noted that the remaining part of the force, i.e. between 25% and 45%, and in particular 1/3, needed to define the opening point of the vacuum valve at the first predetermined pressure difference between the pressure in the cargo tank and the ambient pressure, is provided by the mass of the weight.

Thereby a vacuum valve is provided which fulfils the requirements in relation to the specific values of the first and second pressure difference defining the opening point and closing point, respectively, of the vacuum valve are fulfilled, while simultaneously enabling a quick and efficient pressure equalization. In particular experiments have shown that such a vacuum valve may yield a flow of air with an at least initial flow pressure of 200 mm water column.

In an embodiment the first magnet and the second magnet or the material attracted to magnets are arranged such as to be spaced apart by a gap in a closed position of the vacuum valve.

Thereby a vacuum valve is provided for with which the issues of extremely small tolerances in the construction, that would otherwise be present, particularly in case of the magnets being arranged in contact with one another in the closed position of the valve, are avoided completely. In turn, such a vacuum valve is cheaper to produce and thus also to procure.

In an embodiment the valve stem extends through the guide element and out of the valve housing into the exterior, and the weight is arranged at or on a second end of the valve stem in the exterior.

Thereby a vacuum valve is provided with which the axial movement of the valve stem and valve body is provided with an improved stability, and with which the overall construction is more robust.

In an embodiment the valve body comprises a peripheral partially or fully circumferential shoulder.

Such a shoulder acts as a lifting element providing an increased lifting effect to the valve body once the vacuum valve is open. Thereby a vacuum valve having a pressure equalizing effect which is increased when compared to prior art vacuum valves is provided for.

In an embodiment the valve seat comprises a peripheral shape configured to ensure that the valve seat and the valve body abut in a substantially gas-tight manner in the closed position of the valve body.

Thereby proper closing of the vacuum valve is ensured, even in case the valve body comprises a shoulder.

The vacuum valve may furthermore be adapted for arrangement between an opening in a cargo tank and the exterior, and the valve housing may comprise an inlet opposite to the valve seat, the inlet being in fluid connection with the exterior.

The vacuum valve may further comprise a section connected to or made in one piece with the valve housing and extending above the valve seat, the section comprising an outlet, the outlet being adapted for fluid connection to a cargo tank.

In an embodiment the vacuum valve comprises a section connected to or made in one piece with the valve housing and extending above the valve seat, the section comprising a stop for abutting a corresponding surface on the valve body in a fully open position of the vacuum valve.

Thereby a vacuum valve is provided with which the fully open position of the vacuum valve may be defined in a precise manner, and with which the valve body may be protected from otherwise potentially damaging impacts with the wall of a section extending above the valve seat during opening.

The invention will be explained in more detail in the following description of embodiments that are shown in the drawings.
Fig. 1 is a cross-sectional view of an embodiment of the vacuum valve according to the invention comprising a weight and a pair of magnets shown in a fully open position of the vacuum valve.
Fig. 2 is a cross-sectional view of the vacuum valve according to Fig. 1 in the closed position of the vacuum valve.
Fig. 3 is a cross-sectional view of the vacuum valve according to Fig. 1 in the closed position of the vacuum valve seen from a direction opposite to that of Fig. 2..
Fig. 4 is an exemplary valve characteristic of a vacuum valve according to Figs. 1 and 2.
Fig. 5 is an exemplary valve characteristic of a vacuum valve according to Figs. 1 and 2, but without a shoulder provided on the valve body.

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

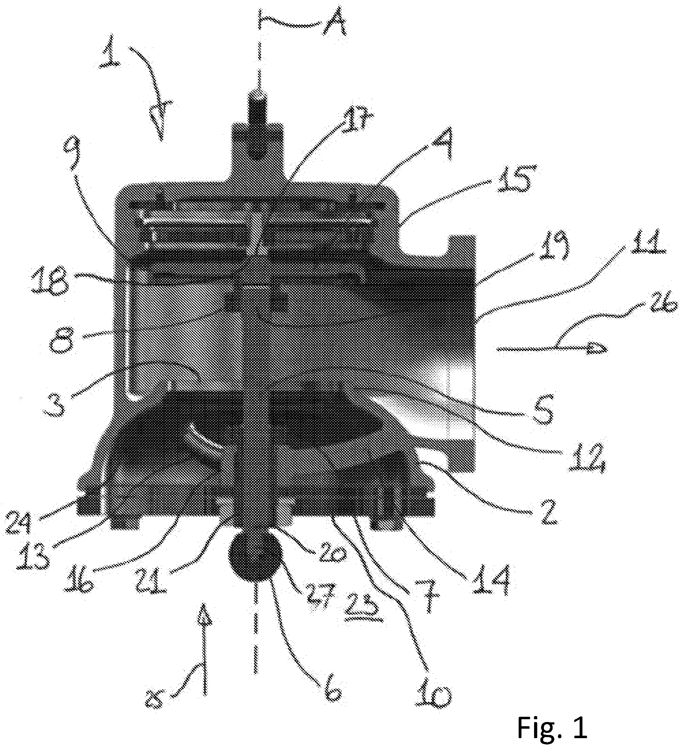

Figs. 1 to 3 shows a vacuum valve 1 according to an embodiment of the invention seen in a cross-sectional view and in a fully open and a closed position, respectively.

The vacuum valve 1 is of the type adapted for use on cargo tanks in, for instance, oil tankers. Thus, the vacuum valve 1 is adapted for arrangement between an opening in a cargo tank and the exterior. In other words, the vacuum valve 1 is of the type adapted for being arranged in a pressure release stub on a gas-filled container, such as a cargo tank on a ship, or in a pressure release tube connected to such a gas-filled container.

The vacuum valve 1 comprises a valve housing 2, a valve stem 5 comprising a first end 19 and a second end 20, a guide element 16 in which the valve stem 5 is arranged such as to be movable in an axial direction A, an axially movable valve body 4 arranged on the first end 19 of the valve stem 5 and a valve seat 3 associated with the valve body 4.

The valve housing 2 has a tubular wall 24 extending between the valve seat 3 and an inlet 10 and forming a flow passage. The inlet 10 of the valve housing 2 is open towards the exterior where an ambient pressure prevails. Thus, the ambient pressure also prevails in the flow passage of the valve housing 2 between the inlet 10 and the valve seat 3.

The vacuum valve according 1 further comprises a section 15 which is connected to or made in one piece with the valve housing 2 and which extends above the valve seat 3 opposite to the flow passage of the valve housing 2. The section 15 comprises an outlet 11, which outlet 11 is adapted for fluid connection with a cargo tank. To this end the outlet 11 of the section 15 is adapted for connection, for instance by being bolted, to a pressure release stub of a cargo tank. Alternatively, the section 15 may form part of a pressure release stub of the cargo tank. In yet another alternative, the section 15 may be adapted for attachment to a venting valve for cargo tanks, such as a venting valve for cargo tanks as described in the applicant's WO 02/095275 A1. In such an alternative, the outlet 11 is typically connected to a lateral opening provided at the bottom of the valve housing of the venting valve, the venting valve in turn being provided with a flange at the bottom of the valve housing of the venting valve, by which the venting valve may be bolted to a pressure release stub of the cargo tank. In an alternative embodiment the section 15 may form part of the pressure release stub or pressure release tube in which the vacuum valve is arranged, rather than of the vacuum valve itself.

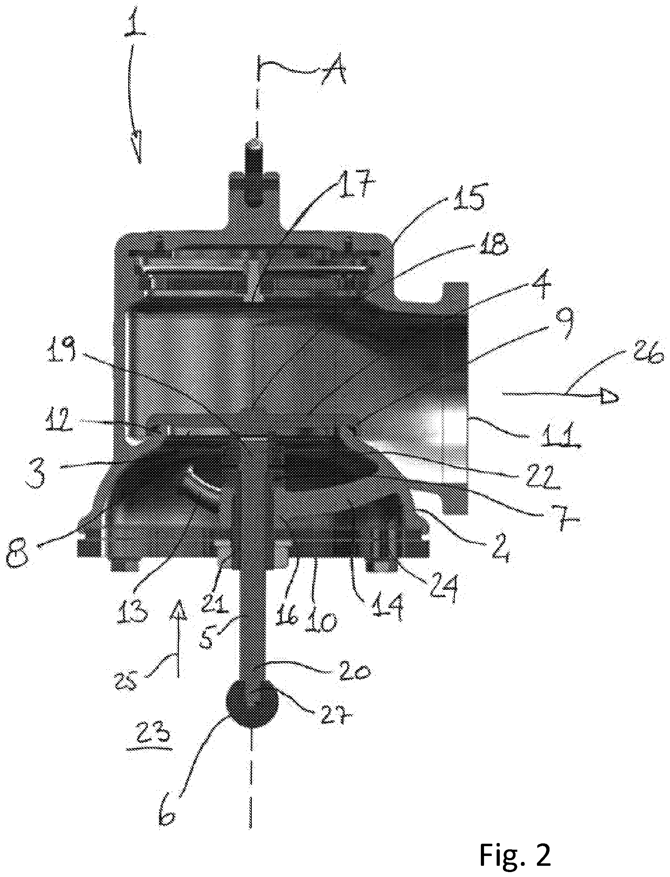

The guide element 16 and thereby the valve stem 5 is connected to the valve body 2, particularly the circumferential wall 24 of the valve body 2, by means of a number of holding elements 13, 14, such as ribs or the like. In the embodiment shown three holding elements are provided, of which two holding elements 13 and 14 are visible in the cross-sectional view of Figs. 1 and 2. In other embodiments another number of holding elements, whether smaller or larger than three, may be provided.

The vacuum valve 1 further comprises a weight 6 and a pair of magnets 7 and 8. In alternative embodiments, one of the magnets 7 and 8 may be substituted with an element made of a material attracted to magnets, for instance iron.

The weight 6 is arranged at or on the second end 20 of the valve stem 5, or in other words such as to be subjected to the pressure exterior to the vacuum valve 1, i.e. the ambient pressure. More particularly, in the embodiment shown, the valve stem 5 extends through the guide element 16 into an exterior or ambient area 23 below the valve housing 2, and the weight 6 is arranged at or on the valve stem 5 in the exterior or ambient area 23 below the valve housing 2. The weight 6 may for instance be screwed, bolted, glued or snapped onto the valve stem 5. In one embodiment the second end 20 of valve stem 5 may comprise a threaded end section 27 onto which the weight 6, which then is provided with a corresponding threading, may be screwed.

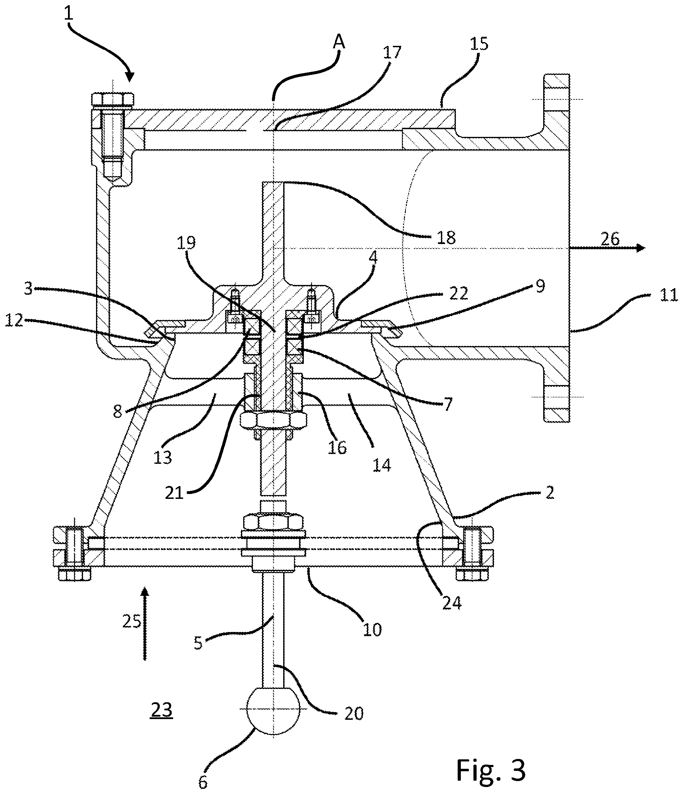

A first magnet 7 of the pair of magnets is arranged on the valve stem 5 adjacent to the valve body 4, and a second magnet 8 of the pair of magnets is arranged on a side of the guide element 16 opposite to the weight 6. Alternatively, the first magnet 7 may be arranged on the valve stem 5 adjacent to the valve body 4, and the second magnet may be arranged on a side of the guide element 16 opposite to the weight 6. In the embodiment shown the first magnet 7 and the second magnet 8 are furthermore arranged in such a way that they are spaced apart by a gap 22 (Figs. 2 and 3) in the closed position of the vacuum valve 1.

In any event the pair of magnets 7 and 8 are arranged on the valve stem 5, and the magnetic strength of the magnets 7 and 8 are chosen, in such a way that the force of magnetic attraction between the first magnet 7 and the second magnet 8 defines an opening point of the vacuum valve 1. In other words, the contribution of the weight 6 to opening point is negligible in comparison with the contribution from the magnets 7 and 8. The opening point of the vacuum valve 1 may lie between 340 and 360 mm water column. Alternatively, the opening point of the vacuum valve 1 may lie at approximately 350 mm water column.

Likewise, the weight 6 is arranged on the valve stem 5 in such a way that the weight 6 influences on the closing motion of the vacuum valve 1 and in such a way that the force of gravity on the weight 6 defines the closing point of the vacuum valve 1. In other words, the contribution of the magnets 7 and 8 to the closing point is negligible in comparison with the contribution from the weight 6, particularly as the magnetic force of attraction is inversely proportional to the square of the distance between the magnets 7 and 8. The closing point of the vacuum valve may lie between 90 and 110 mm water column. Alternatively, the closing point of the vacuum valve may lie at approximately 100 mm water column. To ensure such a closing point of the vacuum valve 1, the weight 6 should be chosen to comprise a suitable weight, where the exact weight depends on the size of the vacuum valve.

The guide element 16 may furthermore be provided with a bushing 21. The bushing 21 may be arranged to lower the frictional forces between the valve stem 5 and the guide element 16, thereby providing for a smoother axial movement of the valve stem 5.

The valve body 4 of the vacuum valve 1 further optionally comprises an outer or peripheral circumferential shoulder 9. The outer or peripheral circumferential shoulder 9 acts a s lifting element in a manner known per se providing an extra lifting force to the valve body 4 once the vacuum valve 1 is open. The outer or peripheral circumferential shoulder 9 may be a partially circumferential shoulder; for instance, the shoulder 9 may comprise a plurality of shoulder segments arranged along the periphery of the valve body 4. Alternatively, as in the embodiment shown, the shoulder 9 extends along the full periphery of the valve body 4. Especially in embodiments where the valve body 4 comprises a shoulder 9, the valve seat 3 optionally comprises a peripheral shape 12 configured to ensure that the valve seat 3 and the valve body 4 abut in a substantially gas-tight manner in the closed position of the vacuum valve 1.

As mentioned, the vacuum valve 1 comprises a section 15. The section 15 further optionally comprises a stop 17. The valve body 4 comprises a corresponding optional surface 18. The stop 17 of the section 15 is adapted for abutting the corresponding surface 18 of the valve body 2 when the vacuum valve 1 is in a fully open position - cf. Fig. 1.

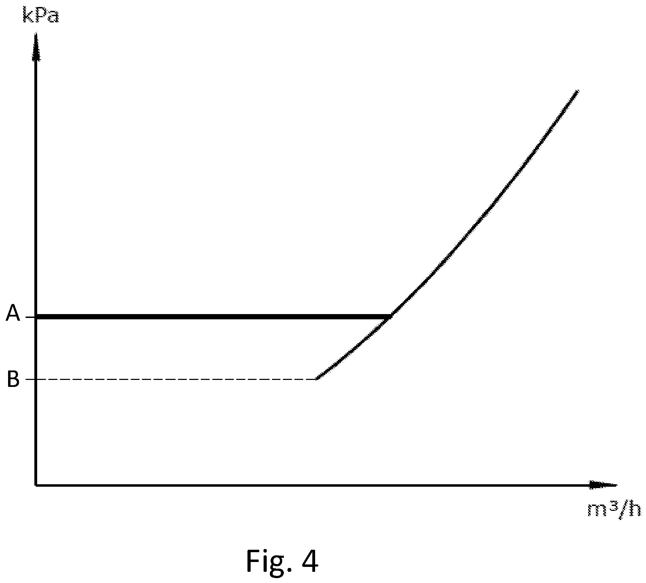

In the following the function of a vacuum valve according to the invention will be described with reference to Fig. 4. Fig. 4 shows an exemplary valve characteristic of the vacuum valve 1 shown in Figs. 1 to 3 is illustrated by means of a plot of the pressure in the valve housing 2 in kPa as a function of the flow of gas through the vacuum valve 1 in m³/h.

The plot of Fig. 4 shows the opening pressure or opening point A and the closing pressure or closing point B of the vacuum valve 1. In the embodiment illustrated by the valve characteristic shown in Fig. 3, the opening point A of the vacuum valve 1 is at 350 mm water column and the closing point B of the vacuum valve 1 is at 100 mm water column. More particularly, the weight 6 of the vacuum valve 1 is chosen to define the closing point B of the vacuum valve 1 at a pressure difference between the pressure in the cargo tank and the ambient pressure exterior to the vacuum valve 1 of 100 mm water column, and the first magnet 7 and the second magnet 8 is chosen to define the opening point A of the vacuum valve 1 at a pressure difference between the pressure in the cargo tank and the ambient pressure exterior to the vacuum valve 1 of 350 mm water column.

Initially, the pressure in the cargo tank is at such a level that the pressure difference between the ambient pressure and the pressure in the cargo tank is less than 350 mm water column. The vacuum valve 1 is closed (cf. Fig. 2 or Fig. 3).

When an amount of fluid, such as e.g. oil, is pumped out of the cargo tank, a pressure drop in the cargo tank and thus above the valve seat 3 or in the section 15 leading to the cargo tank is caused. Thereby, an increase in the pressure difference between the ambient pressure and the pressure in the cargo tank is caused. Eventually, the pressure difference between the ambient pressure and the pressure in the cargo tank reaches 350 mm water column. At this point the opening point A where the vacuum valve 1 opens as the magnetic force of attraction between magnets 7 and 8 is overcome is reached. The pressure difference thereby forces the vacuum valve 1 to open in spite of the valve body's own weight and the force exerted by the magnets 7 and 8. The vacuum valve 1 exhibits a fast opening motion as the force of attraction between the magnets 7 and 8 is inversely proportional to the square of the distance between the magnets.

The precise amount of time elapsed to reach a pressure difference of 350 mm water column, and thus the opening point A, depends on the magnitude of the flow of fluid out of the cargo tank and/or on the amount of fluid pumped out of the cargo tank.

When the vacuum valve 1 is open (cf. Fig. 1), the difference in pressure between the cargo tank and the ambient begins to drop as air from the exterior (cf. arrow 25 on Fig. 1) is let into the cargo tank through the open vacuum valve (cf. arrow 26 on Fig. 1). In Fig. 4, the part of the curve between the opening pressure or opening point A and the closing pressure or closing point B illustrates such a pressure equalization. The vacuum valve 1 according to the invention exhibits an opening motion being sufficiently fast to ensure that the pressure difference never reaches above the opening pressure of 350 mm water column plus 10 % thereof.

The pressure difference between the ambient pressure and the pressure in the cargo tank eventually reaches 100 mm water column, and thus the closing point B where the vacuum valve 1 closes as the force of gravity on the weight 6 becomes larger than the oppositely directed lifting force on the valve body 4. The precise amount of time elapsed to reach a pressure of 100 mm water column, and thus the closing point B, depends on the magnitude of the flow of fluid out of the cargo tank and/or on the amount of fluid pumped out of the cargo tank, and furthermore on the magnitude of the flow of ambient air into the cargo tank. Due to the effect of the weight 6, the vacuum valve 1 exhibits a relatively flat closing curve and thus a slow closing motion as compared to the prior art vacuum valves.

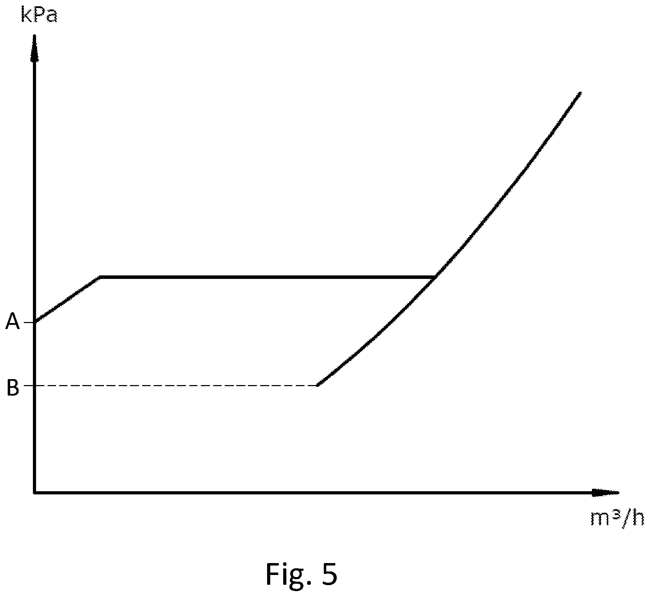

Fig. 5 shows an exemplary valve characteristic of a vacuum valve 1 of the type shown in Figs. 1 to 3, but without the lifting element or shoulder 9 providing extra lifting force to the valve body 4 as described above, illustrated by means of a plot of the pressure in the valve housing 2 in kPa as a function of the flow of gas through the vacuum valve 1 in m³/h. In other words, the difference between the curves of Figs. 4 and 5 illustrate the effect of providing a vacuum valve according to the invention with such a lifting element or shoulder 9.

The person skilled in the art realizes that the present invention by no means is limited to the preferred embodiments described above. On the contrary, many modifications and variations are possible within the scope of the appended claims.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

### Reference numerals

- 1: Vacuum valve
- 2: Valve housing
- 3: Valve seat
- 4: Valve body
- 5: Valve stem
- 6: Weight
- 7: Magnet
- 8: Magnet
- 9: Shoulder (lifting element)
- 10: Inlet (from exterior)
- 11: Outlet (to cargo tank)
- 12: Shape
- 13: Holding element (Rib)
- 14: Holding element (Rib)
- 15: Section
- 16: Guiding element
- 17: Stop
- 18: Surface
- 19: First end of valve stem
- 20: Second end of valve stem
- 21: Bushing
- 22: Gap
- 23: Exterior area below valve housing
- 24: Wall of valve housing
- 25: Arrow
- 26: Arrow
- 27: End section of second end of valve stem
- A: Axial direction

## Claims

1. A vacuum valve (1) for cargo tanks in, for instance, oil tankers, the vacuum valve (1) comprising a valve housing (2) with a valve body (4) and a thereto associated valve seat (3), the valve body (4) being axially movable relative to the valve seat (3) between an open position and a closed position, where the position of the valve body (4) relative to the valve seat (3) is dependent on the difference between the pressure in the cargo tank and the ambient pressure exterior to the vacuum valve (1), the vacuum valve (1) comprising a stem (5) and
a weight (6) arranged outside of the valve housing (2) in such a way that in the open position of the valve body (4) the force of gravity on the weight (6) seeks to move the valve body (4) towards the closed position, **characterised in that** the vacuum valve (1) further comprises
a first magnet (8) provided on the valve body (4) and a second magnet (7) or a material attracted to magnets provided in the valve housing (2), or a first magnet (7) is provided in the valve housing (1) and a second magnet (8) or a material attracted to magnets provided on the valve body (4), in such a way that the magnetic force seeks to hold the valve body (4) against the valve seat (3), wherein
the first magnet (8 or 7) and the second magnet (7 or 8) or the material attracted to magnets as well as the mass of the weight (6) is chosen to define an opening point of the vacuum valve (1) at a predetermined first pressure difference between the ambient (23) and the cargo tank as well as a closing point of the vacuum valve (1) at a predetermined second pressure difference between the ambient (23) and the cargo tank being lower than the first predetermined pressure difference, and wherein
the weight (6) is arranged on the valve stem (5) in such a way that the weight (6) influences on the closing motion of the vacuum valve (1) and in such a way that the force of gravity on the weight (6) defines the closing point of the vacuum valve (1).

2. A vacuum valve according to claim 1, wherein the weight of the weight (6) is chosen in dependence of the size of the vacuum valve (1).

3. A vacuum valve according to claim 1 or 2, wherein the closing point of the vacuum valve (1) lies between 90 and 110 mm water column, or lies at approximately 100 mm water column.

4. A vacuum valve according to claim 1, wherein the valve stem (5) has opposite first and second ends (19 and 20) and the vacuum valve (1) further comprises a guide element (16) in which the valve stem (5) is arranged in an axially movable manner, and wherein:
the valve body (4) is arranged at or on the first end (19) of the valve stem (5),
the weight (6) is arranged at or on the second end (20) of the valve stem (5),
the first magnet (8 or 7) is arranged on the valve stem (5) adjacent to the valve body (4) or on a side of the guide element (16) opposite to the weight (6), and
the second magnet (7 or 8) or the material attracted to magnets is arranged on a side of the guide element (16) opposite to the weight (6) or on the valve stem (5) adjacent to the valve body (4).

5. A vacuum valve according to any one of the above claims, wherein
the first magnet (8 or 7) and the second magnet (7 or 8) or the material attracted to magnets is chosen and the mass of the weight (6) is chosen to define the closing point of the vacuum valve (1) at a pressure difference between the pressure in the cargo tank and the pressure exterior to the vacuum valve (1) of between 90 and 110 mm water column, and to define the opening point of the vacuum valve (1) at a pressure difference between the pressure in the cargo tank and the pressure exterior to the vacuum valve (1) of between 340 and 360 mm water column, or wherein
the first magnet (8 or 7) and the second magnet (7 or 8) or the material attracted to magnets is chosen and the mass of the weight (6) is chosen to define the closing point of the vacuum valve (1) at a pressure difference between the pressure in the cargo tank and the pressure exterior to the vacuum valve (1) of 100 mm water column, and to define the opening point of the vacuum valve (1) at a pressure difference between the pressure in the cargo tank and the pressure exterior to the vacuum valve (1) of 350 mm water column.

6. A vacuum valve according to claim 5, wherein the first magnet (8 or 7) and the second magnet (7 or 8) or the material attracted to magnets is chosen to provide between 55% and 75%, in particular 2/3, of the force needed to define the opening point of the vacuum valve (1) at the first predetermined pressure difference between the pressure in the cargo tank and the ambient pressure.

7. A vacuum valve according to any one of the above claims, wherein the first magnet (8 or 7) and the second magnet (7 or 8) or the material attracted to magnets are arranged such as to be spaced apart by a gap (22) in a closed position of the vacuum valve (1).

8. A vacuum valve according to any one of claims 4 to 7 wherein the valve stem (5) extends through the guide element (16) and out of the valve housing (2) into the exterior (23), and wherein the weight (6) is arranged at or on a second end (20) of the valve stem (5) in the exterior (23).

9. A vacuum valve according to any one of the above claims, wherein the valve body (4) comprises a peripheral partially or fully circumferential shoulder (9), and/or
wherein the valve seat (3) comprises a peripheral shape (12) configured to ensure that the valve seat (3) and the valve body (4) abut in a substantially gas-tight manner in the closed position of the valve body (4).

10. A vacuum valve according to any one of the above claims, wherein the vacuum valve (1) is adapted for arrangement between an opening in a cargo tank and the exterior (23), and wherein the valve housing (2) comprises an inlet (10) opposite to the valve seat (3), the inlet (10) being in fluid connection with the exterior (23).

11. A vacuum valve according to any one of the above claims, wherein the vacuum valve (1) comprises a section (15) connected to or made in one piece with the valve housing (2) and extending above the valve seat (3), the section (15) comprising an outlet (11), the outlet (11) being adapted for fluid connection to a cargo tank.

12. A vacuum valve according to any one of the above claims, wherein the vacuum valve (1) comprises a section (15) connected to or made in one piece with the valve housing (2) and extending above the valve seat (3), the section (15) comprising a stop (17) for abutting a corresponding surface (18) on the valve body (4) in a fully open position of the vacuum valve (1).

## Patentansprüche

1. Vakuumventil (1) für Ladetanks, etwa in Öltankern, wobei das Vakuumventil (1) ein Ventilgehäuse (2) mit einem Ventilkörper (4) und einem diesem zugeordneten Ventilsitz (3) umfasst, wobei der Ventilkörper (4) relativ zum Ventilsitz (3) zwischen einer geöffneten Stellung und einer geschlossenen Stellung axial bewegbar ist, wobei die Stellung des Ventilkörpers (4) relativ zum Ventilsitz (3) von der Differenz zwischen dem Druck im Ladetank und dem Umgebungsdruck außerhalb des Vakuumventils (1) abhängig ist,
wobei das Vakuumventil (1) einen Schaft (5) und ein Gewicht (6) umfasst, das außerhalb des Ventilgehäuses (2) so angeordnet ist, dass in der geöffneten Stellung des Ventilkörpers (4) die Schwerkraft auf das Gewicht (6) versucht, den Ventilkörper (4) in Richtung der geschlossenen Stellung zu bewegen, **dadurch gekennzeichnet, dass** das Vakuumventil (1) ferner umfasst:
einen ersten, am Ventilkörper (4) vorgesehenen Magneten (8) und einen zweiten, im Ventilgehäuse (2) vorgesehenen Magneten (7) oder ein magnetisch angezogenes Material oder einen ersten, im Ventilgehäuse (1) vorgesehenen Magneten (7) und einen zweiten, am Ventilkörper (4) vorgesehenen Magneten (8) oder ein magnetisch angezogenes Material derart, dass die Magnetkraft versucht, den Ventilkörper (4) gegen den Ventilsitz (3) zu halten, wobei
der erste Magnet (8 oder 7) und der zweite Magnet (7 oder 8) oder das magnetisch angezogene Material sowie die Masse des Gewichts (6) so gewählt sind, dass sie einen Öffnungspunkt des Vakuumventils (1) bei einer vorbestimmten ersten Druckdifferenz zwischen der Umgebung (23) und dem Ladetank sowie einen Schließpunkt des Vakuumventils (1) bei einer vorbestimmten zweiten Druckdifferenz zwischen der Umgebung (23) und dem Ladetank definieren, die niedriger als die erste vorbestimmte Druckdifferenz ist, und wobei
das Gewicht (6) so auf dem Ventilschaft (5) angeordnet ist, dass das Gewicht (6) die Schließbewegung des Vakuumventils (1) beeinflusst, und so, dass die Schwerkraft auf das Gewicht (6) den Schließpunkt des Vakuumventils (1) definiert.

2. Vakuumventil gemäß Anspruch 1, wobei das Gewicht des Gewichts (6) in Abhängigkeit von der Größe des Vakuumventils (1) gewählt ist.

3. Vakuumventil gemäß Anspruch 1 oder 2, wobei der Schließpunkt des Vakuumventils (1) zwischen 90 und 110 mm Wassersäule liegt oder bei ungefähr 100 mm Wassersäule liegt.

4. Vakuumventil gemäß Anspruch 1, wobei der Ventilschaft (5) ein erstes und zweites Ende (19 und 20) aufweist, die einander gegenüberliegen, und das Vakuumventil (1) ferner ein Führungselement (16) umfasst, in dem der Ventilschaft (5) axial bewegbar angeordnet ist, und wobei:
der Ventilkörper (4) an oder auf dem ersten Ende (19) des Ventilschafts (5) angeordnet ist,
das Gewicht (6) an oder auf dem zweiten Ende (20) des Ventilschafts (5) angeordnet ist,
der erste Magnet (8 oder 7) auf dem Ventilschaft (5) neben dem Ventilkörper (4) oder auf einer dem Gewicht (6) gegenüberliegenden Seite des Führungselements (16) angeordnet ist, und
der zweite Magnet (7 oder 8) oder das magnetisch angezogene Material auf einer dem Gewicht (6) gegenüberliegenden Seite des Führungselements (16) oder auf dem Ventilschaft (5) neben dem Ventilkörper (4) angeordnet ist.

5. Vakuumventil gemäß einem der vorstehenden Ansprüche, wobei der erste Magnet (8 oder 7) und der zweite Magnet (7 oder 8) oder das magnetisch angezogene Material so gewählt sind und die Masse des Gewichts (6) so gewählt ist, dass sie den Schließpunkt des Vakuumventils (1) bei einer Druckdifferenz zwischen dem Druck im Ladetank und dem Druck außerhalb des Vakuumventils (1) zwischen 90 und 110 mm Wassersäule definieren und den Öffnungspunkt des Vakuumventils (1) bei einer Druckdifferenz zwischen dem Druck im Ladetank und dem Druck außerhalb des Vakuumventils (1) zwischen 340 und 360 mm Wassersäule definieren, oder wobei der erste Magnet (8 oder 7) und der zweite Magnet (7 oder 8) oder das magnetisch angezogene Material so gewählt sind und die Masse des Gewichts (6) so gewählt ist, dass sie den Schließpunkt des Vakuumventils (1) bei einer Druckdifferenz zwischen dem Druck im Ladetank und dem Druck außerhalb des Vakuumventils (1) bei 100 mm Wassersäule definieren und den Öffnungspunkt des Vakuumventils (1) bei einer Druckdifferenz zwischen dem Druck im Ladetank und dem Druck außerhalb des Vakuumventils (1) bei 350 mm Wassersäule definieren.

6. Vakuumventil gemäß Anspruch 5, wobei der erste Magnet (8 oder 7) und der zweite Magnet (7 oder 8) oder das magnetisch angezogene Material so gewählt sind, dass sie zwischen 55 % und 75 %, insbesondere 2/3, der Kraft bereitstellen, die benötigt wird, um den Öffnungspunkt des Vakuumventils (1) bei der ersten vorbestimmten Druckdifferenz zwischen dem Druck im Ladetank und dem Umgebungsdruck zu definieren.

7. Vakuumventil gemäß einem der vorstehenden Ansprüche, wobei der erste Magnet (8 oder 7) und der zweite Magnet (7 oder 8) oder das magnetisch angezogene Material so angeordnet sind, dass sie in einer geschlossenen Stellung des Vakuumventils (1) durch einen Spalt (22) beabstandet sind.

8. Vakuumventil gemäß einem der Ansprüche 4 bis 7, wobei sich der Ventilschaft (5) durch das Führungselement (16) hindurch und aus dem Ventilgehäuse (2) heraus in den Außenbereich (23) erstreckt und wobei das Gewicht (6) an oder auf einem zweiten Ende (20) des Ventilschafts (5) im Außenbereich (23) angeordnet ist.

9. Vakuumventil gemäß einem der vorstehenden Ansprüche, wobei der Ventilkörper (4) eine teilweise oder vollständig umlaufende Schulter (9) umfasst und/oder
wobei der Ventilsitz (3) eine Umfangsform (12) umfasst, die so eingerichtet ist, dass sichergestellt wird, dass der Ventilsitz (3) und der Ventilkörper (4) in der geschlossenen Stellung des Ventilkörpers (4) im Wesentlichen gasdicht aneinander anliegen.

10. Vakuumventil gemäß einem der vorhergehenden Ansprüche, wobei das Vakuumventil (1) zur Anordnung zwischen einer Öffnung in einem Ladetank und dem Außenbereich (23) angepasst ist und wobei das Ventilgehäuse (2) einen Einlass (10) gegenüber dem Ventilsitz (3) umfasst, wobei der Einlass (10) in Fluidverbindung mit dem Außenbereich (23) steht.

11. Vakuumventil gemäß einem der vorhergehenden Ansprüche, wobei das Vakuumventil (1) einen Abschnitt (15) umfasst, der mit dem Ventilgehäuse (2) verbunden oder einstückig mit diesem hergestellt ist und sich oberhalb des Ventilsitzes (3) erstreckt, wobei der Abschnitt (15) einen Auslass (11) umfasst, wobei der Auslass (11) für eine Fluidverbindung mit einem Ladetank angepasst ist.

12. Vakuumventil gemäß einem der vorhergehenden Ansprüche, wobei das Vakuumventil (1) einen Abschnitt (15) umfasst, der mit dem Ventilgehäuse (2) verbunden oder einstückig mit diesem hergestellt ist und sich oberhalb des Ventilsitzes (3) erstreckt, wobei der Abschnitt (15) einen Anschlag (17) umfasst, der in einer vollständig geöffneten Stellung des Vakuumventils (1) an einer entsprechenden Fläche (18) am Ventilkörper (4) anliegt.

## Revendications

1. Soupape (1) à vide pour citernes de chargement, par exemple dans des pétroliers, la soupape (1) à vide comportant un carter (2) de soupape doté d'un corps (4) de soupape et un siège (3) de soupape associé à celui-ci, le corps (4) de soupape étant mobile axialement par rapport au siège (3) de soupape entre une position ouverte et une position fermée, la position du corps (4) de soupape par rapport au siège (3) de soupape étant fonction de la différence entre la pression dans la citerne de chargement et la pression ambiante à l'extérieur de la soupape (1) à vide,
la soupape (1) à vide comportant une tige (5) et un poids (6) disposé à l'extérieur du carter (2) de soupape de telle manière que, dans la position ouverte du corps (4) de soupape, la force de la gravité sur le poids (6) tend à déplacer le corps (4) de soupape vers la position fermée, **caractérisée en ce que** la soupape (1) à vide comporte en outre
un premier aimant (8) placé sur le corps (4) de soupape et un second aimant (7) ou un matériau attiré par les aimants placé dans le carter (2) de soupape, ou un premier aimant (7) placé dans le carter de soupape (1) et un second aimant (8) ou un matériau attiré par les aimants placé sur le corps (4) de soupape, de telle manière que la force magnétique tende à maintenir le corps (4) de soupape contre le siège (3) de soupape,
le premier aimant (8 ou 7) et le second aimant (7 ou 8) ou le matériau attiré par les aimants ainsi que la masse du poids (6) étant choisis pour définir un point d'ouverture de la soupape (1) à vide à une première différence de pression prédéterminée entre le milieu ambiant (23) et la citerne de chargement ainsi qu'un point de fermeture de la soupape (1) à vide à une seconde différence de pression prédéterminée entre le milieu ambiant (23) et la citerne de chargement qui est inférieure à la première différence de pression prédéterminée, et
le poids (6) étant disposé sur la tige (5) de soupape de telle manière que le poids (6) influe sur le mouvement de fermeture de la soupape (1) à vide et de telle manière que la force de gravité sur le poids (6) définisse le point de fermeture de la soupape (1) à vide.

2. Soupape à vide selon la revendication 1, le poids du poids (6) étant choisi en fonction de la taille de la soupape (1) à vide.

3. Soupape à vide selon la revendication 1 ou 2, le point de fermeture de la soupape (1) à vide se situant entre 90 et 110 mm de colonne d'eau, ou se situant à environ 100 mm de colonne d'eau.

4. Soupape à vide selon la revendication 1, la tige (5) de soupape présentant des première et seconde extrémités (19 et 20) opposées et la soupape (1) à vide comportant en outre un élément (16) de guidage dans lequel la tige (5) de soupape est disposé de manière mobile axialement, et :
le corps (4) de soupape étant disposé à ou sur la première extrémité (19) de la tige (5) de soupape,
le poids (6) étant disposé à ou sur la seconde extrémité (20) de la tige (5) de soupape,
le premier aimant (8 ou 7) étant disposé sur la tige (5) de soupape de façon adjacente au corps (4) de soupape ou d'un côté de l'élément (16) de guidage opposé au poids (6), et
le second aimant (7 ou 8) ou le matériau attiré par les aimants étant disposé d'un côté de l'élément (16) de guidage opposé au poids (6) ou sur la tige (5) de soupape de façon adjacente au corps (4) de soupape.

5. Soupape à vide selon l'une quelconque des revendications ci-dessus,
le premier aimant (8 ou 7) et le second aimant (7 ou 8) ou le matériau attiré par les aimants étant choisis et la masse du poids (6) étant choisie pour définir le point de fermeture de la soupape (1) à vide à une différence de pression entre la pression dans la citerne de chargement et la pression à l'extérieur de la soupape (1) à vide comprise entre 90 et 110 mm de colonne d'eau, et pour définir le point d'ouverture de la soupape (1) à vide à une différence de pression entre la pression dans la citerne de chargement et la pression à l'extérieur de la soupape (1) à vide comprise entre 340 et 360 mm de colonne d'eau, ou
le premier aimant (8 ou 7) et le second aimant (7 ou 8) ou le matériau attiré par les aimants étant choisis et la masse du poids (6) étant choisie pour définir le point de fermeture de la soupape (1) à vide à une différence de pression entre la pression dans la citerne de chargement et la pression à l'extérieur de la soupape (1) à vide de 100 mm de colonne d'eau, et pour définir le point d'ouverture de la soupape (1) à vide à une différence de pression entre la pression dans la citerne de chargement et la pression à l'extérieur de la soupape (1) à vide de 350 mm de colonne d'eau.

6. Soupape à vide selon la revendication 5, le premier aimant (8 ou 7) et le second aimant (7 ou 8) ou le matériau attiré par les aimants étant choisis pour fournir entre 55% et 75%, en particulier 2/3, de la force nécessaire pour définir le point d'ouverture de la soupape (1) à vide à la première différence de pression prédéterminée entre la pression dans la citerne de chargement et la pression ambiante.

7. Soupape à vide selon l'une quelconque des revendications ci-dessus, le premier aimant (8 ou 7) et le second aimant (7 ou 8) ou le matériau attiré par les aimants étant disposés de façon à être espacés d'un écartement (22) dans une position fermée de la soupape (1) à vide.

8. Soupape à vide selon l'une quelconque des revendications 4 à 7, la tige (5) de soupape s'étendant à travers l'élément (16) de guidage et hors du carter (2) de soupape jusqu'à l'extérieur (23), et le poids (6) étant disposé à ou sur une seconde extrémité (20) de la tige (5) de soupape à l'extérieur (23).

9. Soupape à vide selon l'une quelconque des revendications ci-dessus, le corps (4) de soupape comportant un épaulement périphérique partiellement ou entièrement circonférentiel (9), et/ou
le siège (3) de soupape comportant une forme périphérique (12) configurée pour garantir que le siège (3) de soupape et le corps (4) de soupape soient en appui de manière sensiblement étanche aux gaz dans la position fermée du corps (4) de soupape.

10. Soupape à vide selon l'une quelconque des revendications ci-dessus, la soupape (1) à vide étant prévue pour être disposée entre une ouverture dans une citerne de chargement et l'extérieur (23), et le carter (2) de soupape comportant une entrée (10) opposée au siège (3) de soupape, l'entrée (10) étant en liaison fluidique avec l'extérieur (23).

11. Soupape à vide selon l'une quelconque des revendications ci-dessus, la soupape (1) à vide comportant une section (15) liée au carter (2) de soupape ou réalisée d'un seul tenant avec celui-ci et s'étendant au-dessus du siège (3) de soupape, la section (15) comportant une sortie (11), la sortie (11) étant prévue pour une liaison fluidique vers une citerne de chargement.

12. Soupape à vide selon l'une quelconque des revendications ci-dessus, la soupape (1) à vide comportant une section (15) liée au carter (2) de soupape ou réalisée d'un seul tenant avec celui-ci et s'étendant au-dessus du siège (3) de soupape, la section (15) comportant une butée (17) servant à prendre appui sur une surface (18) correspondante du corps (4) de soupape dans une position entièrement ouverte de la soupape (1) à vide.
